(19) Europäisches Patentamt
European Patent Office
Office européen des brevets

(11) **EP 2 554 979 A1**

(12) **EUROPEAN PATENT APPLICATION**
published in accordance with Art. 153(4) EPC

(43) Date of publication:
**06.02.2013 Bulletin 2013/06**

(51) Int Cl.:
***G01N 27/06*** (2006.01)   ***C10L 3/06*** (2006.01)

(21) Application number: **10849009.5**

(22) Date of filing: **05.11.2010**

(86) International application number:
**PCT/JP2010/069729**

(87) International publication number:
**WO 2011/121836 (06.10.2011 Gazette 2011/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2010 JP 2010082483**

(71) Applicant: **Mitsui Engineering & Shipbuilding Co.,
Ltd.**
**Chuo-ku**
**Tokyo 104-8439 (JP)**

(72) Inventor: **MURAYAMA, Tetsuro**
**Ichihara-shi**
**Chiba 290-8601 (JP)**

(74) Representative: **WSL Patentanwälte**
**Partnerschaftsgesellschaft**
**Kaiser-Friedrich-Ring 98**
**65185 Wiesbaden (DE)**

(54) **GAS HYDRATE PERCENTAGE MEASURING DEVICE AND THE METHOD OF CONTROLLING THE SAME**

(57)    Provided are a gas hydrate percentage measuring device and a method of controlling the same which are capable of measuring a gas hydrate percentage with high accuracy even if source gas exists dissolved in gas hydrate slurry or as gas bubble therein. The method comprises: a first measuring step for measuring an electric conductivity of gas hydrate slurry which passes through a main line (2) at normal time; a start step for closing a first valve (4) and a second valve (5) while opening a third valve (9) when measuring a gas hydrate percentage; a depressurizing step for depressurizing a measuring part (6) by opening a depressurizing valve (8); a second measuring step for measuring an electric conductivity in the measuring part (6) after completion of the depressurization of the measuring part (6); and a calculation step for calculating a gas hydrate percentage based on the electric conductivity of gas hydrate slurry at normal time and the electric conductivity of the measuring part (6) after the depressurization.

Fig.1

EP 2 554 979 A1

## Description

TECHNICAL FIELD

The present invention relates to a gas hydrate percentage measuring device which measures a gas hydrate percentage of a gas hydrate in a slurry state and a method of controlling the gas hydrate percentage measuring device.

BACKGROUND ART

As safe and economical means for transporting and storing natural gas, methane, and the like, a method using gas hydrate which is solid state hydrate of these source gases have attracted attention recently. The gas hydrate is generally produced under a high pressure and a low temperature (for example, 5.4 MPa, 4 °C). A so-called "gas-liquid stirring method" (see, for example, Patent Document 1) in which stirring is conducted while source gas is bubbled into raw material water is known as a representative method for producing gas hydrate. The gas hydrate obtained by the above method takes a slurry state (two phases of solid and liquid or three phases of gas, solid, and liquid) in which sleet-like hydrate is floating on water.

In the production step of gas hydrate, a control is desirably conducted so that gas hydrate having a constant concentration can be produced, from the viewpoint of commercialization of the gas hydrate business. This is because a too-high concentration of the gas hydrate causes such a problem that blocking occurs in a pipeline for transporting the hydrate. However, it is difficult to directly measure the gas hydrate concentration (gas hydrate percentage), because the produced gas hydrate takes a slurry state.

As a method for measuring a gas hydrate percentage, a method is disclosed which involves sampling to measure the mass of contained gas (see, for example, Patent Document 2). In this measuring method, a predetermined amount of gas hydrate slurry is sampled from a pipeline through which the gas hydrate slurry flows. Next, the gas hydrate is decomposed by heating or the like, and separated into source gas and raw material water. The volume and the composition of the source gas are measured with a gas flow meter and by gas chromatography. Moreover, the weight of the remaining raw material water is measured. The gas hydrate percentage is calculated based on the results of these measurements in this method. This method enables the hydrate percentage to be measured with high accuracy based on the mass ratio, when the gas hydrate slurry contains only gas hydrate and raw material water.

However, the above-described configuration has such a problem that a sufficient accuracy cannot be achieved, when the source gas is dissolved in the gas hydrate slurry (dissolved in raw material water constituting the slurry, hereinafter simply referred to as dissolved) or exists as gas bubbles therein. In other words, a numeric value higher than the actual gas hydrate percentage may be obtained, because the source gas which is dissolved or exists as gas bubbles is regarded as source gas generated due to the decomposition of the gas hydrate. Moreover, for example, when the production apparatus is controlled by using the value, there is a possibility that a target slurry concentration cannot be obtained.

PRIOR ART DOCUMENT

PATENT DOCUMENT

Patent Document 1: Japanese patent application Kokai publication No. 2000-302701
Patent Document 2: Japanese patent application Kokai publication No. 2008-224378

SUMMARY OF THE INVENTION

PROBLEM TO BE SOLVED BY THE INVENTION

The present invention has been made in view of the above-described problems, and an object of the present invention is to provide a gas hydrate percentage measuring device and a method of controlling the gas hydrate percentage measuring device which are capable of measuring a gas hydrate percentage with high accuracy, even if source gas is dissolved in gas hydrate slurry or exists as gas bubbles therein.

MEANS FOR SOLVING THE PROBLEM

A method of controlling a gas hydrate percentage measuring device according to the present invention for achieving the above object is a method of controlling a gas hydrate percentage measuring device which measures a gas hydrate percentage in a gas hydrate production plant having a production apparatus for producing gas hydrate, and a pipeline for transferring the gas hydrate produced in the production apparatus in a slurry state, wherein the gas hydrate measuring device connected to the pipeline has a main line and a bypass line, the main line has a first valve, a second valve, a measuring part between the first valve and the second valve, an electric conductivity meter provided to the measuring part, and a depressurizing valve for depressurizing a pressure of the measuring part, the bypass line is configured to establish a connection from an upstream of the first valve through a third valve to a downstream of the second valve, and the method is characterized by comprising: a first measuring step for measuring an electric conductivity of gas hydrate slurry which passes through the main line at normal time; a start step for closing the first valve and the second valve while opening the third valve, when measuring a gas hydrate percentage; a depressurizing step for depressurizing the measuring part by opening the depressurizing valve; a second measuring step for measuring an electric conductivity in the measuring part after completion of the depressurization of the measuring part; and a calculation step for calculating a gas hydrate percentage based on the electric conductivity of the gas hydrate slurry at the normal time and the electric conductivity of the measuring part after the depressurization.

With this configuration, the gas hydrate percentage can be measured with high accuracy, while not being affected by source gas which is dissolved in the gas hydrate slurry or exists as gas bubbles therein. In addition, since the measurement is performed on the main line, the gas hydrate percentage can be measured with high accuracy. This is because of the following reason. Specifically, since the gas hydrate has a lower density than water, the gas hydrate floats on the water, and often exists in a non-uniform manner. Accordingly, there is a possibility that an error may occur in the measurement of the gas hydrate percentage when the gas hydrate slurry is sampled by a branch pipe or the like.

Moreover, the configuration in which the measuring part and the electric conductivity meter are provided to the main line makes it possible to always monitor the electric conductivity of the passing gas hydrate slurry. As a result, the gas hydrate percentage can be measured with high accuracy, even if the concentration of electrolytes in the raw material water is changed due to the production of the gas hydrate. In other words, since a pure water portion of the supplied raw material water is consumed by the production of the gas hydrate in the gas hydrate production apparatus, the concentration of electrolytes in the remaining raw material water tends to increase with the lapse of time; however, measurement can be conducted, without being affected by the change in concentration of the electrolytes.

Note that the first measuring step may be carried out immediately before the measurement of the gas hydrate percentage. Moreover, a configuration may be employed in which the first measuring step is repeated continuously in advance. In other words, a control is conducted in which the first measuring step is conducted multiple times, and an average value thereof is sent to the calculation step as a result of the first measuring step. With this configuration, the measurement value of the electric conductivity can be obtained continuously or multiple times. Hence, an effect of the non-uniform existence of the gas hydrate in the slurry can be reduced by taking an average thereof.

The above-described method of controlling a gas hydrate percentage measuring device is characterized in that the measuring part has a heating apparatus, and the method comprises a temperature control step for causing the heating apparatus to perform heating such that a temperature of the measuring part after the depressurizing step is made the same as that before the depressurizing step.

An electric conductivity is influenced by the liquid temperature. Hence, this configuration enables the electric conductivity to be measured immediately after completion of the depressurizing step, even if a rapid decomposition (an endothermic reaction) of the gas hydrate occurs due to the depressurization. In addition, the control is conducted in which the temperature after the depressurization is made the same as that before the depressurization. Hence, the accuracy of the gas hydrate percentage measurement can be improved. Note that a control may be conducted such that heating is conducted simultaneously with the depressurization in order to improve the decomposition rate of the gas hydrate in the measuring part.

EFFECTS OF THE INVENTION

The gas hydrate percentage measuring device and the method of controlling a gas hydrate percentage measuring device according to the present invention make it possible to provide a gas hydrate percentage measuring device and a method of controlling the gas hydrate percentage measuring device which are capable of measuring a gas hydrate percentage with high accuracy, even if source gas is dissolved in gas hydrate slurry or exists as gas bubbles therein.

BRIEF DESCRIPTION OF THE DRAWINGS

[Fig. 1] Fig. 1 is a diagram showing an outline of a gas hydrate percentage measuring device of an embodiment according to the present invention.
[Fig. 2] Fig. 2 is a diagram showing an outline of the gas hydrate percentage measuring device of the embodiment according to the present invention.

MODES FOR CARRYING OUT THE INVENTION

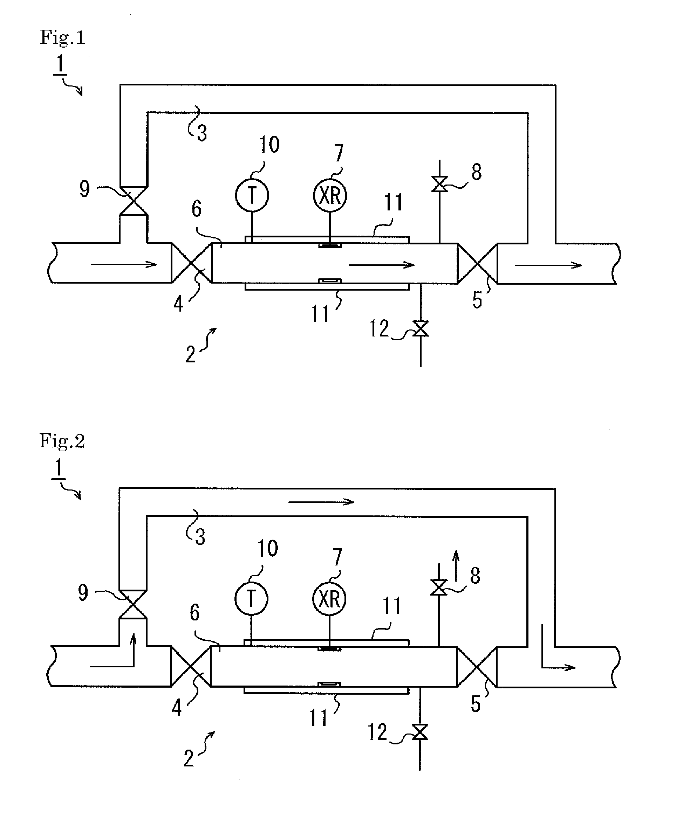

Hereinafter, a method for measuring a gas hydrate percentage of an embodiment according to the present invention will be described with reference to the drawings. FIG. 1 shows an outline of a gas hydrate percentage measuring device (hereinafter referred to as a measuring device) 1. The measuring device 1 has a main line 2 and a bypass line 3. The main line 2 has a first valve 4 on an upstream side and a second valve 5 on a downstream side. A part between the first valve 4 and the second valve 5 is termed as a measuring part 6. The measuring part 6 has an electric conductivity meter 7. In addition, the measuring part 6 has a depressurizing valve 8 for releasing a pressure inside the measuring part 6, and a drain valve 12. Moreover, the measuring part 6 has a thermometer 10 for measuring a temperature inside the measuring part 6, and a heating apparatus 11 for heating the inside of the measuring part 6.

The bypass line 3 establishes a communicative connection from an upstream of the first valve 4 of the main line 2 to a downstream of the second valve 5. In addition, the bypass line 3 has a third valve 9 for opening and closing the bypass line 3.

Next, operation of the measuring device 1 is described. First, source gas and raw material water are supplied to a gas hydrate production apparatus. The source gas reacts with the raw material water to form gas hydrate, and slurry of two phases with unreacted raw material water, or of three phases including also unreacted source gas is obtained. The slurry passes through the main line 2 of the measuring device 1 as indicated by the arrows. At this time, the first valve 4 and the second valve 5 are open, whereas the third valve 9 is closed. At this normal time, an electric conductivity of the slurry is measured by the electric conductivity meter 7 (a first measuring step). The electric conductivity value obtained here indicates the electric conductivity of water of adhesion.

Next, the third valve 9 is opened, and then the first valve 4 and the second valve 5 are closed (a start step). At this time, the slurry flows through the bypass line 3, as indicated by the arrows in FIG. 2. Here, a portion of the slurry takes a state of being tightly closed in the measuring part 6. Next, the measuring part 6 is depressurized by opening the depressurizing valve 8 (a depressurizing step). In this depressurizing step, the gas hydrate decomposes, and gas held by the gas hydrate and source gas which is dissolved in the slurry or which exists as gas bubbles therein are released through the depressurizing valve 8. Following the release of the gases, water having constituted the gas hydrate and raw material water having constituted the slurry are left in the measuring part 6. Note that the depressurization of the measuring part 6 only needs to be such that the pressure is depressurized from approximately 5.4 MPa to at least a pressure at which the gas hydrate decomposes. Desirable, the pressure is depressurized to about the atmospheric pressure.

In parallel with this depressurizing step, the measuring part 6 is heated with a heating apparatus 11 (a temperature control step). A first purpose of conducting this control is to prevent the raw material water from freezing in the measuring part 6. This is because the decomposition reaction of the gas hydrate which follows the depressurization is an endothermic reaction. A second propose is to reduce the temperature difference inside the measuring part 6 before and after the depressurizing step. This is because the electric conductivity depends on the change in temperature of a measurement target. The smaller the temperature difference is, the more accurate the gas hydrate percentage measurement is. A third purpose is to accelerate the decomposition of the gas hydrate. This control is intended to shorten the time for measuring the gas hydrate percentage. In other words, this control is conducted because the amounts of the source gas and the raw material water supplied to the production apparatus or the amount of cooling by a heat exchanger provided to the production apparatus is controlled based on the gas hydrate percentage obtained by the measurement, and hence a smaller time difference between the gas hydrate production and the measurement leads to a more accurate control of the gas hydrate percentage.

After completion of the depressurization of the measuring part 6 and the decomposition of the gas hydrate, the electric conductivity in the measuring part 6 is measured (a second measuring step). The electric conductivity value obtained here indicates the electric conductivity in a state of a mixture of water of adhesion and pure water. In other words, since the concentration of electrolytes in the liquid phase is lowered, the electric conductivity is lowered, as compared with those of the first measuring step.

Next, a gas hydrate percentage is calculated based on the electric conductivity of the gas hydrate slurry at the normal time (the value obtained in the first measuring step) and the electric conductivity of the measuring part 6 after completion of the depressurization (the value obtained in the second measuring step) (a calculation step). At this time, the hydrate percentage $r_h$ can be determined by the Math. 1, where $C_0$ is the value obtained in the first measuring step, and $C_f$ is the value obtained in the second measuring step:

$$(\text{Math. 1}) \quad r_h = 1 - (C_f / C_0)$$

Here, it is assumed that the gas hydrate is a non-conductor, and contains no electrolytes therein. It is also assumed that gas hydrate containing no gas therein (empty cages) does not exist.

Based on the result of the measurement of the gas hydrate percentage, for example, the amount of cooling by the heat exchanger provided to the production apparatus is controlled, so that the gas hydrate percentage can be within a desired range.

Finally, after completion of the measurement, the liquid phase in the measuring part 6 is drained by opening the drain valve 12, or is allowed to flow to the downstream by opening the first valve 4 and the second valve 5. Then, the first valve 4 and the second valve 5 are opened, and the third valve 9 is closed (a recovery step). As a result, the slurry flows again through the main line 2, and a normal state is reached (see FIG. 1).

The following operation and effect can be achieved by the above-described configuration. First, the gas hydrate percentage can be measured with high accuracy, while not being affected by source gas which is dissolved in the gas hydrate slurry or exists as gas bubbles therein. Second, an extremely correct measurement of the gas hydrate percentage can be conducted, because the electric conductivity is measured, with the focus being placed on the change in concentration of electrolytes in the liquid phase of the slurry.

Note that a conventionally used electric conductivity meter can be used as the electric conductivity meter. This electric conductivity meter has such a configuration that two electrodes are provided on an inner wall of the measuring part 6, and a resistance of the slurry is detected by applying an alternating current between the electrodes. Here, the shapes of the electrodes are desirably such that projections of the electrodes from the inner wall of the measuring part 6 are small. In addition, the positions of the provision of the electrodes are desirably lower than both side surfaces of (portions just beside) a pipe in the case where the pipe is placed horizontally, because gas hydrate has a lower density than raw material water. This is intended to prevent such an accident that blocking of the pipe of the measuring part 6 occurs due to attachment and deposition of the hydrate onto the electrodes.

EXPLANATION OF REFERENCE NUMERALS

1      gas hydrate percentage measuring device
2      main line
3      bypass line
4      first valve
5      second valve
6      measuring part
7      electric conductivity meter
8      depressurizing valve
9      third valve
10     thermometer
11     heating apparatus
12     drain valve

**Claims**

1. A method of controlling a gas hydrate percentage measuring device which measures a gas hydrate percentage in a gas hydrate production plant having a production apparatus for producing gas hydrate and a pipeline for transferring the gas hydrate produced in the production apparatus in a slurry state , wherein
   the gas hydrate measuring device connected to the pipeline has a main line and a bypass line,
   the main line has a first valve, a second valve, a measuring part between the first valve and the second valve, an electric conductivity meter provided to the measuring part, and a depressurizing valve for depressurizing a pressure of the measuring part,
   the bypass line is configured to establish a connection from an upstream of the first valve through a third valve to a downstream of the second valve, and
   the method is **characterized by** comprising:

a first measuring step for measuring an electric conductivity of gas hydrate slurry which passes through the main line at normal time;
a start step for closing the first valve and the second valve while opening the third valve, when measuring a gas hydrate percentage;
a depressurizing step for depressurizing the measuring part by opening the depressurizing valve;
a second measuring step for measuring an electric conductivity in the measuring part after completion of the depressurization of the measuring part; and
a calculation step for calculating a gas hydrate percentage based on the electric conductivity of the gas hydrate slurry at the normal time and the electric conductivity of the measuring part after the depressurization.

2. The controlling method according to claim 1, **characterized in that**
   the measuring part has a heating apparatus, and
   the method comprises a temperature control step for causing the heating apparatus to perform heating such that a temperature of the measuring part after the depressurizing step is made the same as that before the depressurizing step.

Fig.1

Fig.2

| **INTERNATIONAL SEARCH REPORT** | International application No. |
|---|---|
| | PCT/JP2010/069729 |

**A. CLASSIFICATION OF SUBJECT MATTER**
*G01N27/06*(2006.01)i, *C10L3/06*(2006.01)i

According to International Patent Classification (IPC) or to both national classification and IPC

**B. FIELDS SEARCHED**

Minimum documentation searched (classification system followed by classification symbols)
G01N27/00-27/24, C10L3/06

Documentation searched other than minimum documentation to the extent that such documents are included in the fields searched

| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| A | JP 2007-238715 A (Mitsui Engineering & Shipbuilding Co., Ltd.), 20 September 2007 (20.09.2007), entire text; all drawings (Family: none) | 1-2 |
| A | WO 2008/123305 A1 (Mitsui Engineering & Shipbuilding Co., Ltd.), 16 October 2008 (16.10.2008), entire text; all drawings & JP 2008-246333 A | 1-2 |
| A | JP 2003-50221 A (Mitsubishi Heavy Industries, Ltd.), 21 February 2003 (21.02.2003), entire text; all drawings (Family: none) | 1-2 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 January, 2011 (27.01.11) | 08 February, 2011 (08.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/069729

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2009-242734 A (Mitsui Engineering & Shipbuilding Co., Ltd.), 22 October 2009 (22.10.2009), entire text; all drawings (Family: none) | 1-2 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000302701 A

- JP 2008224378 A